# EUROPEAN PATENT SPECIFICATION

(11) **EP 2 865 196 B1**
(45) Date of publication and mention of the grant of the patent: **22.03.2017**
(21) Application number: 13888014.1
(22) Date of filing: 26.06.2013
(51) Int. Cl.: H04Q 9/00, H04N 5/44, H04N 5/445

(54) **A REMOTE CONTROLLER**
FERNSTEUERUNG
TÉLÉCOMMANDE

(30) Priority: 26.06.2012 US 201261664744 P
(43) Date of publication of application: 29.04.2015
(73) Proprietor: Vodoke Asia Pacific Limited, Wanchai, Hong Kong (CN)
(72) Inventor: TOH, Michael, Kok, Meng, Singapore 486018 (SG); ZHANG, Qichuan, Singapore 486018 (SG)
(74) Representative: Stolmár & Partner Patentanwälte PartG mbB
(86) International application number: PCT/SG2013/000264
(87) International publication number: WO 2014/209221

(56) References cited:
- JP-A- 2002 315 080
- US-A1- 2004 233 238
- US-A1- 2006 080 710
- US-A1- 2007 124 765
- US-A1- 2008 055 423
- US-A1- 2009 066 647
- US-A1- 2010 060 715
- US-A1- 2011 055 865
- US-A1- 2012 013 536
- US-A1- 2012 127 375
- US-B1- 6 489 986
- US-B1- 8 004 389

## Description

### Related Applications

This application claims the benefit of U.S. Provisional Application no. 61/664,744, filed on June 26, 2012.

### Technical Field

The present disclosure relates generally to a remote controller. In particular, a remote controller for an interactive system for delivering content to a display screen where network-based digital video, audio, textual and visual informative, and entertainment content are streamed from a server to a client for displaying on a connected display screen.

### Background

Entertainment content has enthralled viewers on the television screen for many years. With the advent of technology, in particular, high-speed network connectivity, an increasing amount of entertainment content can now be provided to users through a content provider.

Cable network providers, broadband-based providers or satellite dish network providers are presently the leaders in content provision for everyday consumers. However, a user's entertainment content is usually limited to fixed channel packages or various entertainment channels which the user has preselected and is paying for. Some providers do provide an "on-demand" option for movie broadcast selection. Nevertheless, entertainment content as provided by traditional set top boxes can seldom be considered as interactive. The limit of interactivity usually ends at a user changing channels at his set top box.

Technology has advanced recently, such that operating systems for mobile devices such as smartphones or tablets carry about and run a multitude of applications which engage the user and seeks to provide a user with magnitudes of information at his fingertips at a moment's notice. A few technology developers have also sought and managed to provide such mobile device operating systems into set top boxes connected to a television display set such that a user is able to enjoy his mobile content on a large screen display.

.

It is thus desirable to have a content provision system which provides interactivity and learns and adapts to a user's preferences and usage of the system. Certain drawbacks also arise in the area of providing a suitable device to fully utilize all the features of such a content provision system. The present disclosure seeks to provide a viable option for a user in controlling a content provision system remotely.

Patent document US 2012/013536 discloses a dual use remote-control device including a first set of input controls such as buttons positioned on a top side of the housing, a second set of input controls positioned on a bottom side of the housing including a QWERTY keyboard and an optical sensor to remotely control movement of a cursor on a display by the optical sensor detecting movement of a user's finger across the optical sensor.

Patent document US 2004/233238 discloses a user interface including at least one focus pointer that allow a user to quickly access the elements contained in a plurality of folders. A fixed focus pointer selects one of a plurality of elements of a main folder in response to interaction of a user. A moveable focus pointer scrolls through a plurality of elements of the first subfolder to select a second subfolder in response to interaction of a user.

Patent document US 2011/055865 discloses a remote controller a space remote controller and controlling method. The method includes displaying a screen remote controller, partitioning a portion of a whole screen of the broadcast receiver into at least two control regions, displaying a pointer to enable a first pointing signal outputted from the space remote controller to indicate one control region of the screen remote controller, receiving a second pointing signal from the space remote controller, and executing a function corresponding to the one control region indicated by the pointer.

### Summary

The above-mentioned problems are solved by the teaching of the invention, which is defined by independent claim 1.

According to an aspect of the present disclosure, there is provided a remote controller for a system for delivering content to a display screen, the system including a set top box coupled between a central content server and the display screen, the remote controller including: a housing; a plurality of keys for controlling various functions to be carried out by the set top box, the plurality of keys extruding from an external surface of the housing; an infrared transmitter provided within the housing for carrying out infrared communication; and a remote controller wireless communications module provided within the housing, for communication with a corresponding box wireless communications module in the set top box; wherein a dedicated wireless communication channel is established between the remote controller wireless communications module and the box wireless communications module for exclusive communication between the remote controller and the set top box.

In an embodiment, the remote controller further includes a channel handling module on the wireless communications module, for monitoring the wireless communication channel.

In an embodiment, the channel handling module carries out a switch and re-establishment of a wireless communication channel between the remote controller and the set top box when a possibility of communications interference is determined.

In an embodiment, the remote controller further includes a voice over Internet Protocol (VOIP) module coupled to the remote controller wireless communications module for streaming a VOIP conversation over the dedicated wireless communications channel.

In an embodiment, the remote controller further includes a microphone and speaker combination provided in the housing of the remote controller.

In an embodiment, the microphone and speakers are located on the remote controller such that the remote controller is provided with a communications handset function for carrying out a VOIP conversation.

In an embodiment, the remote controller further includes an audio module coupled to the remote controller wireless communications module for receiving and playing audio extracted from the delivered content and streamed over the dedicated wireless communications channel to the remote controller.

In an embodiment, the remote controller further includes a speaker provided in the housing of the remote controller, for playing audio from the audio module.

In an embodiment, the remote controller further includes an audio jack for connecting the remote controller to headphones for playing audio from the audio module.

In an embodiment, the remote controller further includes a feedback module coupled to the audio jack, for providing an indication to the set top box that headphones have been connected to the audio jack, and a redirect request for streaming audio to the audio module.

In an embodiment, the remote controller further includes a screen control module coupled to the remote controller wireless communications module for receiving and playing video extracted from the delivered content and streamed over the dedicated wireless communications channel to the remote controller.

In an embodiment, the remote controller further includes a display screen on the housing of the remote controller for displaying video content from the screen control module.

In an embodiment, the remote controller further includes a touchscreen display on the housing of the remote controller for displaying video content from the screen control module and providing user manipulation to the screen control module.

In an embodiment, the remote controller further includes a camera in the housing of the remote controller and a camera module coupled to the remote controller wireless communications module for delivering any of a captured image or a captured video from the camera over the dedicated wireless communications channel to the remote controller.

In an embodiment, the remote controller further includes an infrared receiver within the housing, for receiving an infrared transmission from a remote controller of an auxiliary device.

In an embodiment, the remote controller further includes a learning module coupled to the infrared receiver.

In an embodiment, the learning module determines a modulated signal from a received infrared transmission of the auxiliary device remote controller, and assigns the modulated signal as a function of one of the plurality of keys on the remote controller.

In an embodiment, at least one of the plurality of keys include a secondary function, accessed through a predetermined actuation of the at least one of the plurality of keys.

In an embodiment, the remote controller further includes a light emitting diode (LED) within the housing and provided beneath the plurality of keys, wherein the LED lights up when the secondary function of the at least one of the plurality of keys is accessed.

In an embodiment, the remote controller further includes a gyroscope provided within the housing.

In an embodiment, the remote controller further includes a micro-electromechanical accelerometer provided within the housing.

In an embodiment, the remote controller further includes a gyroscope and a micro-electromechanical accelerometer.

In an embodiment, the remote controller further includes a cursor control module, for receiving input from the gyroscope and a micro-electromechanical accelerometer, and translating the input into a cursor for manipulation on the display screen.

In an embodiment, the remote controller further includes an alpha-numeric keyboard on the housing of the remote controller.

In an embodiment, the remote controller further includes a slide-out alpha-numeric keyboard in the housing of the remote controller.

In an embodiment, the housing includes a polymer, and wherein the polymer is provided with an antimicrobial resistance.

In an embodiment, the polymer is a synthetic polymer, including any one of a synthetic organic polymer, a thermoplastic, a thermoset, an elastomer and a synthetic fiber.

In an embodiment, the polymer is a non-synthetic polymer, including any one of collagen, chitosan, metal cellulose, and cellulose-based hydrogels.

In an embodiment, the antimicrobial resistance is provided by impregnating the polymer with any one of metal ions and organic acids.

In an embodiment, the metal ions include any one of silver, gold, copper, zinc, cobalt, nickel, zirconium, molybdenum, and calcium.

In an embodiment, the remote controller further includes an antimicrobial coating provided on the surface of the housing of the remote controller.

In an embodiment, the remote controller further includes a screen provided on the housing of the remote controller, the screen provided with antimicrobial resistance.

In an embodiment, the antimicrobial resistance is provided by including any of metal ions and organic acids into the fabrication of the screen.

In an embodiment, the remote controller further includes buttons for performing preprogramed functions related to an environment in which the system is installed.

In an embodiment, the preprogramed functions include any one of: bringing up a room-service menu on the display, bringing up a concierge menu on the display, dialing a hotel telephone operator, bringing up a meal menu, and as for emergency assistance contact.

### Brief description of drawings

Embodiments of the present disclosure are explained, by way of example, and with reference to the accompanying drawings. It is to be noted that the appended drawings illustrate only examples of embodiments of this disclosure and are therefore not to be considered limiting of its scope, for the disclosure may admit to other equally effective embodiments.
FIG. 1 illustrates a system for delivering content to a display screen, according to an embodiment of the present disclosure.
FIG. 2 illustrates a content distribution network according to the present embodiment.
FIG. 3 illustrates a screen display of a graphical user interface according to an embodiment.
FIG. 4 illustrates a schematic representation of program instruction sets corresponding to the set top box according to an embodiment.
FIG. 5A illustrates a remote controller provided as part of the system of the present embodiment.
FIG. 5B illustrates a rear view of the remote controller of FIG. 5A.
FIG. 6 illustrates a screen display of a GUI according to another embodiment.

### Detailed Description

In the following, reference is made to embodiments of the disclosure. However, it should be understood that the disclosure is not limited to specific described embodiments. Instead, any combination of the following features and elements, whether related to different embodiments or not, is contemplated to implement and practice the disclosure.

Furthermore, in various embodiments the disclosure provides numerous advantages over the prior art. However, although embodiments of the disclosure may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the appended claims except where explicitly recited in a claim(s). Likewise, any reference to "the invention" shall not be construed as a generalization of any inventive subject matter disclosed herein and shall not be considered to be an element or limitation of the appended claims except where explicitly recited in a claim(s).

In the present disclosure, depiction of a given element or consideration or use of a particular element number in a particular FIG. or a reference thereto in corresponding descriptive material can encompass the same, an equivalent, or an analogous element or element number identified in another FIG. or descriptive material associated therewith. The use of "/" herein means "and / or" unless specifically indicated otherwise.

As used herein, the term "set" corresponds to or is defined as a non-empty finite organization of elements that mathematically exhibits a cardinality of at least 1 (i.e., a set as defined herein can correspond to a singlet or single element set, or a multiple element set), in accordance with known mathematical definitions (for instance, in a manner corresponding to that described in An Introduction to Mathematical Reasoning: Numbers, Sets, and Functions, "Chapter 11: Properties of Finite Sets" (e.g., as indicated on p. 140), by Peter J. Eccles, Cambridge University Press (1998)). In general, an element of a set can include or be a system, an apparatus, a device, a structure, a structural feature, an object, a process, a physical parameter, or a value depending upon the type of set under consideration.

The terms "group" and "gang" as used herein correspond to or are defined as an organization of two or more elements, e.g., a group or gang can be defined as a set having at least two components. The term "subgroup" as used herein corresponds to or is defined as a portion of a group or gang, and hence corresponds to or can be defined as an organization of at least one element, e.g., a subgroup can be defined as a set having at least one component.

Embodiments in accordance with the present disclosure are directed to systems and methods for delivering content to a display screen. In particular, present embodiments are directed to system and methods for delivering content to a display screen, in which the display is governed by a GUI, and in which the GUI is modified by the provision of digital advertising content tailored by a user's usage and preferences.

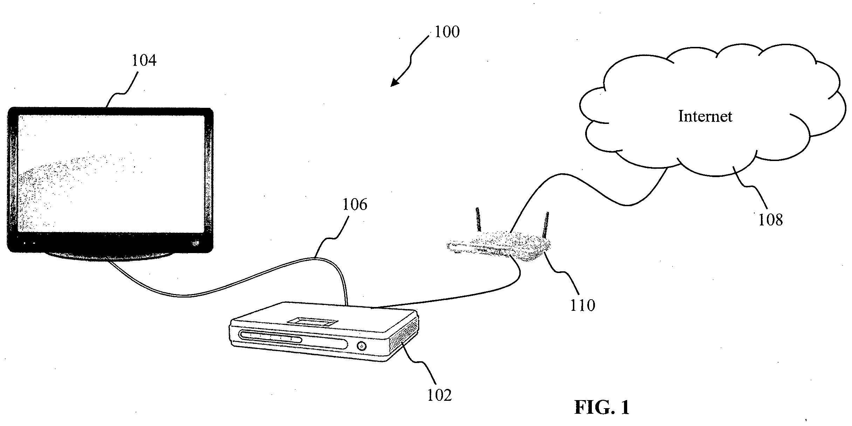

FIG. 1 illustrates a system for delivering content to a display screen, according to an embodiment of the present disclosure. System 100 includes a set top box 102 coupled to a display screen 104, a television in this case, the set top box 102 delivering entertainment and/or informative content, and preferably digitally, to the display screen 104 through a cable connection 106. In the present embodiment, a High-Definition Multimedia Interface (HDMI) cable is provided for audio/video content transfer for playing on the display screen 104. In other embodiments, other audio/video connectors, for example, RCA connectors, a S-Video connector, a VGA connector, a DVI connector, or a IEEE 1394 FireWire connector can be used for the delivery of content from box 102 to screen 104. Wireless connectivity through Wifi or any other wireless communications protocol could also be used as a connection between box 102 and screen 104. In other embodiments, screen 104 can be provided by a computer monitor, a projector, a computer laptop screen configured to receive input or any other display apparatus capable of receiving video and/or audio input. Speakers (not shown) may also be coupled, possibly through screen 104, to box 102 to enhance the audio content delivery for enhancing a user's experience.

Set top box 102 is also coupled for communication with the Internet 108, and in the present embodiment, through a broadband modem 110 modulating analog carrier signals to encode and decode digital information. The modem 110 acts as a router for communication with an Internet Service Provider, which thereafter provides further communication to the Internet 108. Set box 102 could also be wirelessly coupled to the broadband modem 110 or to any other kind of modem that provides access to the Internet.

In the present embodiment, the set up box 102 acts as a client in communication with a remote server 200 which provides content through the Internet for multiple clients. The set top box 102 provides a secure client connection to resources offered and hosted by the server 200. The server, as well as the deliverable content hosted on the server, are managed by a content provider with which various users have pre-registered to have content delivered to them, through a provided associated set top box 102. The set top box 102 is typically user-specific and pre-configured to provide content from the server 120, as according to registration with the content provider.

### Box HW

Set top box 102 in the present embodiment includes a central processing chip/unit (CPU) and a graphics processor chip/unit (GPU) which carries out data stream decoding of incoming data received from the content server through the internet. Presently, a single core processor is provided, but a dual-core or multiple core processor is also possible. On-board memory 400 is provided with the CPU, for operating system and application processing, as well as to provide a data stream buffer for smooth delivery of audio visual content. Sufficient nonvolatile flash memory is provided, as well as dynamic random access memory, in order for smooth operating of the set top box 102. The processor and the memory are coupled and configured to execute stored program instructions, software instructions, and/or perform state machine operations that manage, direct, or perform visual and/or audio content management operations, communications, telecommunications, or any other application based function in accordance with the present disclosure.

Set top box 102, in the present embodiment, is configured to operate the open-source Android™ operating system (OS), which is released by Google Inc. and the Open Handset Alliance. As source-code for the operating system is open, the present device manufacturer, which is also the applicant for the present application, is able to freely modify and develop the stock Android OS into a console operating system for the present set top box 102. For the present embodiment, a configured user-interface for ease of content manipulation as well as a wide range of applications are designed, to provide the user of the set top box 102 with simplified and enjoyable entertainment choice and selection. Alternatively, other device operating systems, which provide flexibility in design and manufacturer operation, such as the Firefox™ OS, a Linux-based OS, or any other useable operating systems might be used instead.

Further, in the present embodiment, modifications as to the operation of the OS on the CPU architecture have been carried out such as to facilitate smoother data decoding and delivery, and operates in conjunction with a video decoder hardware provided with the GPU, and optimized by the present device manufacturer.

The set top box 102 is also provided with a remote controller communications module, in this case a radio frequency receiver or transceiver, and specifically a 2.4 GHz receiver, which allows for the set top box 102 to communicate with a provided corresponding remote controller 500 for a user to manipulate content provided and displayed from the set top box 102 with ease.

Further, a plurality of input and output ports are provided with the set top box 102, for example a Universal Serial Bus port for access and communication with a portable hard disk, headphone ports, microphone ports, IEEE 1394 Firewire ports, Secure Digital card slots, video output ports, HDMI input ports, and any other useful or necessary input or output connections may also be provided.

### Server

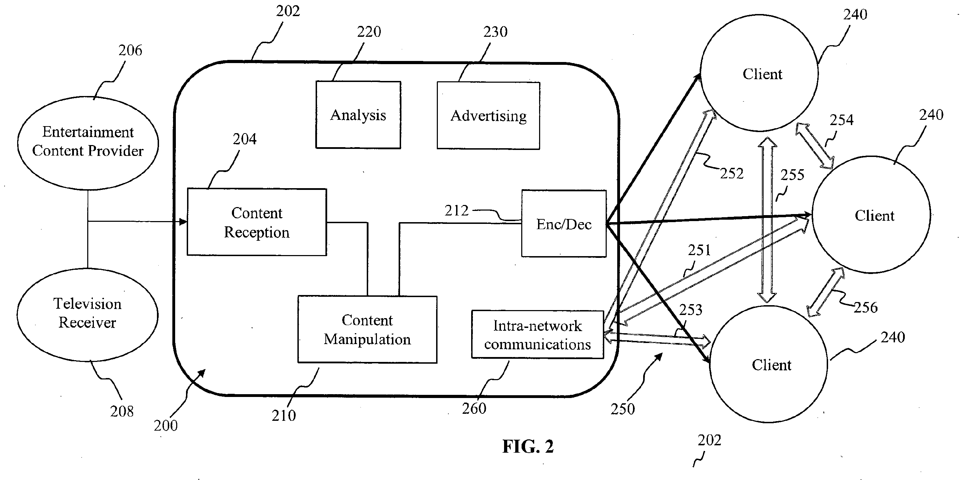

FIG. 2 illustrates a content distribution network according to the present embodiment. Remote content delivery server 200 is hosted on a high performance computing system which is dedicated to run programs and services as a host, to serve remote users through a network. Adequate memory and hardware capabilities are provided on the content delivery server 200 to facilitate requests from multiple users. In the present case, a streamlined server software application 202 operating on the computing system provides the operational functionality for the content delivery server 200. A backup server, hardware and software, as well as other redundant functionalities, may also be provided to operate in the background, and designed to take over, should issues arise from operating the main server functions.

Content delivery server 200 includes fast network connections, and the hardware is optimized to provide a high communications throughput. The server 200 is intended to be constantly connected to the network, such that client-server connectivity is constantly provided.

Server 200 includes a content reception module 204, where audio visual content such as video stream feeds from a secondary entertainment content provider 206, or a live television broadcast stream from a television receiver 208 may be received and redistributed through the content delivery server 200. Other forms of entertainment, infotainment, or information content may also be received at the content reception module 204 and thereafter provided for distribution through the content delivery server 200 to remote clients through the network.

### Delivery of content

The content reception module 204, as well as other operational modules in the server 200 can be implemented in various manners, for instance such as a software component add-on to the server application 202. The content reception module 204 can then be executed within the server application 202 for interfacing between other operational modules as well as external to the server 200. With regard to the term "module", it is stated that the term refers to the particular function or functions performed by the associated processing unit; the "module" may or may not correspond to actual electrical circuitry.

Content delivery server 200 further includes a content manipulation module 210, which receives as an input content from the content reception module 204. Received content is then identified and written into memory storage accordingly by the content manipulation module 210. The stored content is then marked and made available for delivery upon request by a client device 240 to the server 200. Content may also be made constantly available by the content manipulation module 210. For example, content from television channels, which typically broadcasts an uninterrupted feed, can be received by the content reception module 204 and provided to the content manipulation module 210, which then stores the content into a memory buffer and thereafter makes available the content to an encoder/decoder module 212 for streaming. Client devices 240 can thereafter simply link up to a stream broadcasted by the content delivery server 200 for access to the television channel content.

Alternatively, content can also be stored by the content manipulation module 210 on memory within the content delivery server 200 for dedicated access by a client device 240 upon request. For example, a high-definition movie is stored on the server, and only upon an authenticated request from the client device 240, a stream could be created by the server 200 for access by the requesting client device 240, for perhaps an unhindered feed by the server 200. Other forms of content, for example, music and pre-recorded events, can be similarly delivered from the content delivery server 200.

The encoder/decoder module 212 includes hardware and/or software audio and video compression modules which allows for the streamed content to be compactly delivered and reduces load on the network connections of the content delivery server. In the present embodiment, a software compression module based on the H.264/MPEG-4 advanced video coding standard is used for the preparation of content for over-the-network deliver. This allows for a more optimized compression with a lower bandwidth, and without compromise on video resolution, thereby leading to an ease of content distribution.

As mentioned above, the client device 240 including a set top box 102 runs on device operating system such as Android which also enables access to third-party applications, for example, an application providing Internet radio functionality, where audio content from radio stations broadcasting online can be played; or a news access feed application, which accesses the Internet to obtain news feeds which can be displayed thereafter. These third-party applications also obtain data and information through the Internet connection of the client device 240, but data obtained by these third-party applications need not be provided through the content delivery server 200.

### Describe content, content presentation, UI

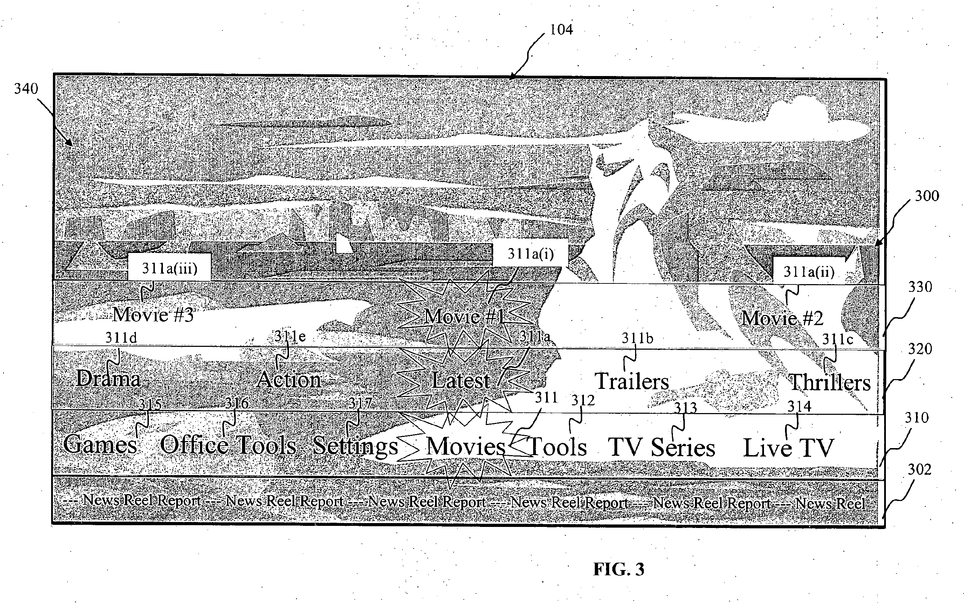

FIG. 3 illustrates a screen display of a graphical user interface according to an embodiment. In particular, FIG. 3 illustrates a home screen of a graphical user interface (GUI) 300. It is hereby noted that an inventor of the present application is also an inventor of PCT International Application PCT/SG2012/000122, entitled "An apparatus and method for enabling access to a plurality of activities".

Set top box 102 is coupled to the display screen 104 which displays delivered content which is manipulated by a user through the provided GUI 300. GUI 300 is rendered by the an application software riding on top of the operating system running by means of the processor of the set top box 102. The home screen is referred to as the default display arrangement of the GUI 300, where in no application or content selection has yet been selected and activated by a user.

The GUI 300 includes a plurality of options and selections that provides a user choice in deciding the content to be displayed on screen 104. Selection is made by the user through a remote controller 500 which controls at least a cursor or screen option in manipulating the GUI 300.

In the present embodiment, GUI 300 includes a scrolling ticker tape 302 provided at the bottom of the screen. Scrolling ticker tape 302 receives data input from an online news feed and reformats the input data into a scrolling news feed. Data may be obtained from a dedicated news application in communication with the Internet, or through any other news source. In the present embodiment of the GUI 300, the scrolling ticker tape 302 is designed to only appear in the main screen, and where no application or content selection has yet been selected and activated by the user. Alternatively, the scrolling ticker tape 302 can be arranged to be displayed despite the activation of content or an application. Yet alternatively, the scrolling ticker tape 302 can be arranged to be displayed in a content display or an application, and be provided with an auto-hide function where the tape 302 appears for a short predetermined period of time and thereafter disappears off the screen. The tape 302 can be re-displayed upon control via the remote controller 500.

In the embodiment, the GUI 300 includes a main selection row 310 providing a plurality of objects representing selection options 311-317 available to a user. Selection options 311-317 in this embodiment represent entertainment content such as movies, television series, and live television, applications such as games and office tools, and options such as tools and configuration settings. Multiple other selection options may also be provided in other embodiments, and are not limited in number or sub-options derived therefrom.

In the embodiment, the GUI 300 provides a user with ease of selection by "sliding" the selection options horizontally about the main selection row 310 with the remote controller 500. In this case, the selection options 311-317 are configured to loop around from one end to the other when sliding the selection row 310 during the selection of an option. In an embodiment, there are provided more selection options that that which may be allowed to be displayed on a screen. The selection options are then cyclically displayed on the main selection row 310 when a user undertakes a choice of selection options.

Each selection option 311-317 is also provided with at least a subset of options, to be displayed on a second selection row 320, when an option 311 is selected. In this embodiment, option 311 is selected by manipulating the selection option 311 into a central position in the middle of the selection row 310, and activating thereafter. The selection option 311 is indicated to a user as being central by a highlight of the option 311 once the option 311 moves into the central position of the row 310. Activation is provided by an actuation of an "up" button or a "select" button on the remote controller 500, more of which will be described below.

Activation of the selection option 311 brings up a hidden second row 320 in the GUI 300, which provides a plurality of objects representing selection sub-options 311a, 311b, 311c, 311d, and 311e. Sub-options 311a-e relate to further choices provided to a user in the selection of option 311, for allowing the user more choice to choose from in terms of displayable content. In an example in the present embodiment, selection option 311 relates to an option of selecting a movie for viewing on the screen 104. Activating option 311 for movies slides up a second row 320 which provides a plurality of options related to various categories or genres of movies for assisting a user with choice of selection.

Selection of any of sub-options 311a-e on the second selection row 320 is carried out the same way as that of selecting and activating a selection option 311 on the main selection row 310. In an example, selecting a selection option 311 provides an entertainment option of screening a movie, and upon selection of option 311, opens up a second selection row 320 corresponding to categories of available movies for a user's choice and selection, which similarly may be selected and activated by scrolling of sliding the second row 320.

In the embodiment, for certain sub-options, there are provided further categorical selection auxiliary options 311 a(i), 311 a(ii) and 311 a(iii), on a third selection row 330 that opens up upon selection of the relevant sub-option 311a. In the example, the third selection row 330 opens up to display choices related to titles of Movie #1 311a(i), Movie #2 311a(ii) and Movie #3 311 a(iii), which are categorized under the "Latest" category section of sub-option 311a.

It may be noted that GUI 300 also provides a background screen 340 which may differ during the manipulation of the main selection row 310, the second selection row 320 and/or the third selection row 320. Whenever an option in the main selection row 310, the second selection row 320 and the third selection row 320 is highlighted in the central selection position, a corresponding background screen 340 may be displayed, possibly providing further information or which aesthetically represents the option highlighted.

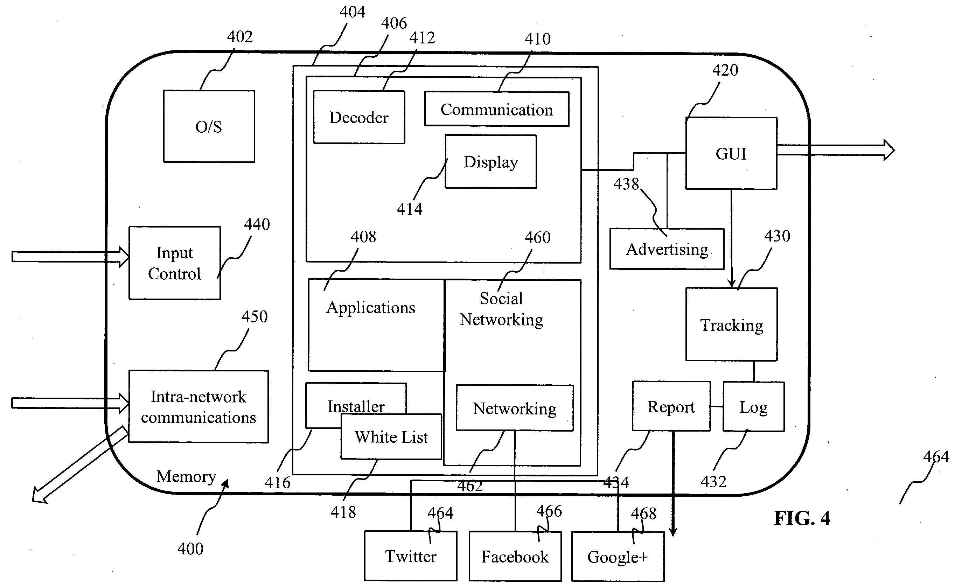

FIG. 4 illustrates a schematic representation of program instruction sets corresponding to the set top box 102 according to an embodiment of the present disclosure. As indicated, memory 400 is provided in the set top box 102, and accessible with the CPU. Operating system 402 is mounted on the memory and designed to run on the hardware provided to allow the functioning of the set top box 102. Memory 400 also includes a host of on-board applications 404, each application 406, 408 having been installed into the memory 400 of the set top box 102. In the embodiment, two applications are representatively illustrated as being installed on the memory 400, but as many applications as the memory 400 can host may be installed to operate on the set top box 102. Modules and applications operating on and from the memory 400 cause the processor of the set top box 102 to carry out varying functions as operating features of the set top box 102.

In the embodiment, a movie application 406 is provided as installed on the memory 400 of the set top box. Movie application 406 includes a plurality of operating functions which are depicted on FIG. 4 as modules carrying out program instruction sets in the schematic framework. Movie application 406 includes a communication module 410, which establishes a secure connection, either on its own, or under the purview of an overarching set top box communications module (not shown), with a server 200 such as to initiate and host the reception of data streams delivered from the server 200. Communication module 410 is responsible for client-server communication regarding the movie application 406, as well as any content in relation with the movie application 406 delivered by the server, as well as any other communication possibly subsidiary to the movie application 406. In an example, the instruction communication module 410 sends out to the server 200 a request for the provision of Movie #1 311a(i). Server 200 in response, carries out an authentication request, which is handled by the communication module 410, and when authenticated, begins the streaming of content data for Movie #1 over the Internet to set top box 102. The authentication could be a simple acknowledgement by the user of set top box 102 in response to an on-screen pop up message, or user account validation and recordal, or any other type of functional authentication.

Movie application 406 also includes a decoder module 412, which receives a data stream from server 200 through communication module 410. The decoder module 412 handles any decompression or decoding of the streamed data and prepares the received content for display. A display module 414 is also provided, which obtains the prepared content from decoder module 412 and adjusts the content in accordance to user settings, for example, preferred resolution of display, upscaling, display size, subtitles, and any other possible user preferences in relation to video content display.

In the embodiment, application 408 can be, by example a simple calculator application which is pre-installed by the supplier of the set top box 102. In the present embodiment, all applications come pre-installed, and no access is provided to the user of the set top box 102 to install or uninstall applications. Any change in applications need to be requested by the user with the delivery service provider who, upon approval, may patch into the set top box 102 to carry out installation of approved programs. This is so as to maintain optimum functionality of the set top box 102 by only allowing applications which have been tested and found operating smoothly to be provided on the set top box 102.

In an embodiment, an application installer 416 is provided on the memory 400, the function of which is to allow a user or a technician access to the installation of third party applications onto the set top box 102. In an embodiment, the application installer 416 is limited to the installation of applications which fall in a white list 418 of approved applications for installation.

A GUI module 420 is also provided in operation on the memory 400, which undertakes all content to be output from the set top box 102, in particular, display content generated by the OS 402, movie application 406, any on-board applications 404, or any other display content generating application, and propagates the content into display on the screen 104 as part of the GUI 300.

### Analytics

In the present embodiment, a tracker application 430 is hosted on the memory 400 and operates as an additional layer over the GUI 300 generated by the GUI module 420. Even as GUI module propagates the plurality of rows 310, 320, 330, including the multiple selection options on each row, in the present embodiment, the tracker application 430 runs in concurrence and performs a tracking role on each and every manipulation and selection which is carried out by the user.

Turning to FIG. 3 to describe the operation of the tracking application 430, each selection option, sub-option or auxiliary option of the main selection row 310, second selection row 320 and the third selection row 330 respectively correlates to a unique identifier which is provided to the tracker application 430. As a simple example, the unique identifier can be a 3-digit identification number, each of the digits of the identification number associated with the options on a certain row - the first digit associated to the main selection row 310, the second digit associated to the second selection row 320 and the third digit associated to the third selection row 330. In this case, the main selection row 310 has 7 selection options 311-317, and each selection option is provided with a corresponding first digit of the 3-digit identification number, for example, a movie option 311 would be provided with an identifier in a form such as "100". Carrying on with the example, the second selection row 320 relating to categories or genres of movies would be provided with a corresponding second digit of the 3-digit identification number, where sub-option 311a of the "Latest" category section is provided with an identifier in the form of "110". Third selection row 330 would thus be provided with a corresponding third digit of the 3-digit identification number, and for example, Movie #3 311a(iii) is provided with a 3-digit identification number such as "113".

Other identification schemes may of course be possible, and also dependent on the number of selection rows and number of options for selection. For example, the earlier identification scheme would have to be expanded to a 4-digit identification number if there were 4 rows, or perhaps should there be more than 10 selection options in each row, the simplistic identification scheme proposed would have to introduce another layer of perhaps hexadecimal identification or any other form of adapting to the provided parameters for identification.

Returning to FIG. 4, as mentioned, the tracking application 430 monitors the manipulation a user makes on during browsing and selection on the options provided on the GUI 300. Each time an option on any row is highlighted, in the central position on the row, the unique identifier of that option is captured by the tracking application 430 and stored inside a tracking log 432 on the memory 400. The tracking application 430 also monitors each time an option is chosen for which to open up a sub-selection row (if available), as well as each time an option is selected for action. Such actions are tracked and logged according inside tracking log 432.

A plethora of further information can be stored together with the captured unique identifier, for example, the date and time stamp (down to the millisecond parameter), the reference title as to the option identification logged, or any other information useful for understanding the data logged.

As mentioned, the tracking application 430 not only tracks the selected options, but also each option as the user manipulates the selection rows. This actually allows the tracking application 430 to obtain information as to a user's manipulation patterns and establish trends specific to the user, and his tendencies in set top box usage. It can also bring about some insight as to a user's preference, for example in whether a user was deciding between a choice of watching a certain movie or watching a TV series, before settling on the TV series. Such a function of tracking allows the application 430 to capture not only the user's first choice, in this case watching the TV series, but also his possible second choice, in this case the movie which he did not end up watching.

Memory 400 further hosts a report generator 434 operating in conjunction with the tracking application 430 and extracting logged information from the tracking log 432. Report generator 434 further includes communication capabilities through perhaps the set top box communications module, such that a communications channel is established between the set top box 102 and the content server 200, in particular, an analytics module 220 hosted on the content server 200. In the embodiment, the analytics module 220 sends a poll request to the user-specific set top box 102, and the report generator 434 operating in the set top box 102. The report generator 434 thereafter compiles the collected data for a predetermined time period and sends the data onto the analytics module 220 for collating and further analysis. The collected data can be later deleted from the tracking log 432, once a confirmation is received back from the analytics module 220 that the sent data is appropriately received.

The present embodiment calls for analysis to be conducted on logged data obtained from tracking application 430 about a user's usage of the set top box 102 within the analysis module 220 at the central server 200, instead of locally at the set top box 102. However, it may be also interesting for such an application to be provided on the set top box 102, such that the user is presented with simple extractions of his usage patterns, for example, his favorite TV series, his favorite gaming application, number of movies watched, etc. It may also be useful to provide a user with access to a password protected tracking log presented in an easy to view format for identification of the activities carried out on the set top box for a given period.

Analysis carried out within the analysis module 220 to further extract information useful for a content provider from the data extracted and retrieved from the tracking log 432 through the report generator 434. In particular, patterns and trends relating to a user's usage of the set top box 102 are sought and multiple algorithms are carried out on the data to achieve such projections.

### Advertising

In the present embodiment, such trends and preferences are sought such as to provide insight as to how best to reach the user as a consumer through set top box based advertising. Analysis module 220 on the central server operates to run such analysis and generate for example, projections and/or observations on a user's preferred genre of movies, for example a user's favorite actor or actress, a user's favorite movie, a user's preferred genre of TV shows, a user's favorite TV series, a user's favorite game or application, etc. Such observations and projections are compiled and identified with an identifying reference for the registered user of the set top box 102.

The compiled observations and projections are thereafter provided to an advertising module 230 provided on the central server 200. The advertising module 230 includes a stored database of digital advertising backgrounds, which can be used in replacing any one background screen 340 as provided and projected by the GUI module 420 in propagating a GUI 300 that provides a correlated background screen 340 according to an option being selected. In particular, server advertising module 230 identifies certain areas and GUI selection options for which a user might be persuaded to follow the leading of specifically inserted advertising backgrounds. In the embodiment, the server advertising module 230 works through a local advertising module 438 hosted on the memory 400 of the set top box.

Prior to any tracking analysis, the GUI module 420 propagates a GUI 300 which include a set of standard pre-determined stock background scenes, of simple design, and proposed to aesthetically enhance the background as projected on the display screen 104. With the information provided by the tracking application 430, the data compiled and delivered by the tracking log 432, and analyzed by the analysis module 220. User-tailored advertising background scenes can be delivered to the set top box, and particularly to the local advertising module 438, such that these user-tailored advertising background scenes can replace the stock scenes as initially provided.

Examples of user-tailored advertising background scenes could be: providing a background scene including a plurality of movies cut outs selectable for viewing, starring a projected user's favorite actor or actress; providing a background scene of movie related information, trivia, options to purchase paraphernalia related to the movie, based on a projected user's favorite movie; or providing a background scene including multiple options for a user to access game tips/hints/cheats or purchase game-related toys or paraphernalia based on an observation of a user's favorite game.

In the present embodiment, the advertisement background scenes are built in conjunction with a paid advertiser, i.e. a publisher which developed and is marketing a popular game application may be interested in paying for and providing guidance to coming up with a background scene which includes options for a user to access game tips/hints/cheats or to purchase game-related toys or paraphernalia. The intention is of course to provide a user with the ease of access to features and options which may be of his liking such that the user in turn carries out a transaction from which the advertiser benefits.

The provision such advertising opportunities is enhanced with the set top box used, in particular, a set top box which is not limited to only provide relatively fixed entertainment options such as movies and televisions shows, but also provides access to a plurality of other networked linked functions, primarily a fully functional internet browser, or a platform based applications store. Such multiple access functionalities provide users with multiple opportunities to carry out transactions, which of course enhance the attractiveness of such a system of content delivery to an advertiser.

In other embodiment, projections and observations generated by the analysis module 220 can lead to for example, a user's favorite actor or actress, or a user's favorite movie, or a user's favorite movie genre. In such a case, the advertising module 230 can determine to instead propagate within the GUI 300 of the set top box a new genre in the second row 320, relating to movies starring the user's favorite actor or actresses. Or the advertising module 230 can cause the GUI 300 to add to auxiliary options in the third selection row 330 movies similar to the user's favorite movie, and where such movie recommendations are in proximity to the user's favorite movie selection option. The advertising module 230 can also provide additional content to cause the GUI 300 to enhance the selection of movie options within the user's favorite movie genre.

In another embodiment, should the analysis module 220 present an observation that the present user utilizes the set top box 102 for children related learning services and applications, the advertising module 230 may provide multiple options as to beneficial interactive storybooks of learning applications. Further, discounts as to purchases might be offered for such promotions, which are displayed on background screens during manipulation and selection within sub-options of the genre.

The above relate to various examples by which the usefulness of understanding a user's usages patterns and trends and preferences can be leveraged to not only provide possible advertising benefit, but for a delivery service provider to enhance the quality and the relevancy of content provided as choice to a user with the server-connected set top box 102. The above examples are not limiting and any other logical utilization of such data as provided to the user, the delivery service provider, and advertisers can be realized.

### Remote controller

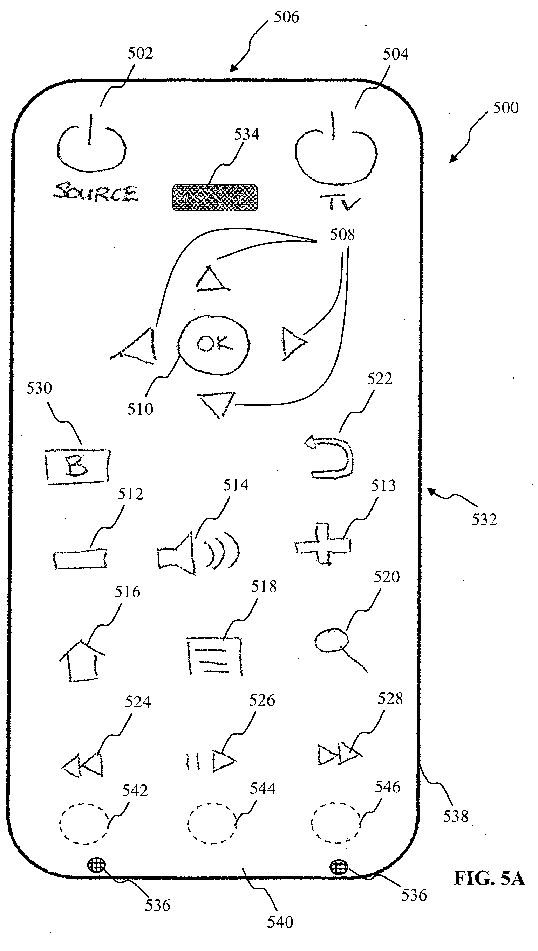

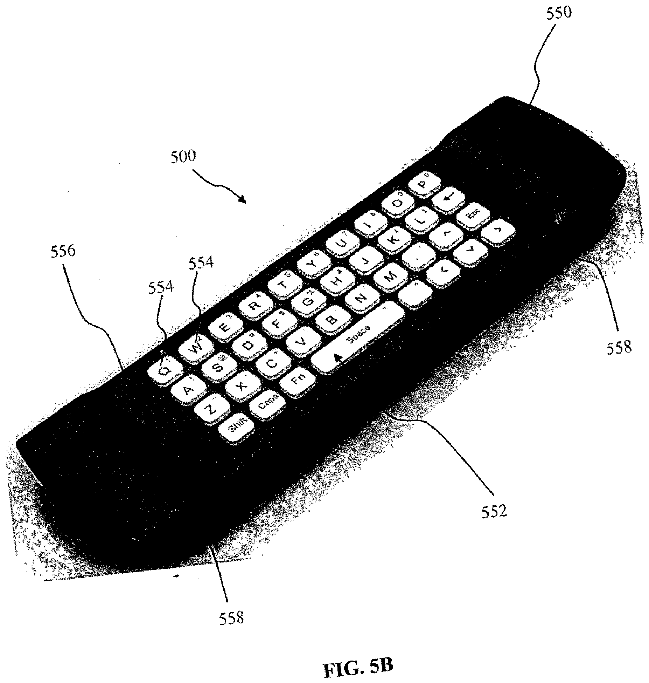

FIG. 5 illustrates a remote controller provided as part of the system of the present embodiment. Remote controller 500 is provided as part of the set top box 102, and in particular, to provide a controlling function as to the operation of the set top box 102. Remote controller 500 generally provides a user control over GUI 300 in selecting various options for activation, and also provides additional input control functionalities in various applications, for example a free-moving cursor control function, a text entry function as well as a motion control function.

Remote controller 500 correlates to an input control module 440 in the memory 400 of the set top box 102. In the present embodiment, the remote controller 500 communicates with the set top box 102 by way of radio frequency (RF) communication, and in particular, RF communication at a frequency of 2.4GHz. Set top box 102 includes a 2.4GHz communications chip for communication with a wireless communications chip (not shown) within the remote controller 500, the set top box communications chip capable of establishing and maintaining a communications channel with the remote controller 500.

In establishing the channel, and in initializing and synchronizing the remote controller to the set top box 102, a service technician initiates a manual pairing request from the remote controller 500. Such a request is transmitted from the remote controller 500 as an area request, such that all set top boxes within transmission range of the remote controller 500 would be in receipt of a pairing request from the remote controller 500. Upon receiving such a pairing request, a set top box would similarly provide an open channel ping wherein the remote controller 500 requesting pairing is able to note the ping signal and also evaluate the signal strength. It would be reasonable to assume that the stronger the signal, the closer and less obstructed the set top box would be to the remote controller, which usually pertains to the set top box in close proximity to the remote controller 500, and the technician initiating manual pairing. Such a methodology is useful in pairing remote controllers with set top boxes in close proximity to each other, for example as provided in hospital wards with multiple beds and television sets and accompanying set top boxes.

After establishing the channel with the set top box in closest proximity and strongest signal strength, the remote controller 500 carries out a pairing, and both the remote controller 500 and the set top box 102 saves and encrypts the established channel of communication such that communication between the paired remote controller 500 and the set top box 102 is not interfered with from other remote controllers in the vicinity. Further, the paired components are provided with a channel scan and switch functionality, through a channel handling module on the wireless communications chip, such that if it is determined that there are too many peripherals in the vicinity operating on the same frequency channel and which may pose a risk as to interference in communication, the paired remote controller 500 and set top box 102 carry out a scan for the least occupied channel and carry out a paired switch onto the channel without affecting remote to box communication.

In describing various features of the remote controller 500 of the present embodiment, a television power button 504 is provided, which carries a "learning" function, wherein the remote controller 500 can interact with a remote controller for a television set remote controller, and "learn" most standard functions associated with the television set. In the present embodiment, the button 504 is provided as a power button as such function may be all a user would practically require in carrying out his entertainment experience, i.e. switching on the television set. Further, as button 504 is a "learning" button, the button may be re-programed by the user for whatever purpose he may desire, for example having the television power button 504 to operate as the input source selection button for the television set. As most device remote controllers communicate via infrared communication, the present remote controller 500 is also provided with a concealed infrared transceiver, which provides a transmit and a receive function for infrared frequencies, at a top end 506 of the remote controller 500, for "learning" as well as normal operation. In other embodiments, an infrared transmitter and an infrared receiver are separately provided.

In the present embodiment, an auxiliary source button 502 is further provided, to allow the remote controller to be used with an auxiliary source device such as a video recorder, a DVD player, or an audio player system. As per the television power button 504, the auxiliary source button 502 is a "learning" button that is able to determine the modulated infra-red signal transmitted by actuation of the desired button on the auxiliary source device remote controller and store it into memory of the remote controller 500.

Further, the remote controller 500 provides additional functionality, where as many auxiliary source device remote controller functionalities may be learnt, as allowed by available buttons on the remote controller 500. In such a case, the auxiliary source button 502 is depressed together with another button on the remote controller 500, such that the auxiliary source device remote controller functionality is "learnt" and stored as a secondary function of the remoter controller 500 button. For example, in order to incorporate the "Play" functionality of a DVD player, the auxiliary source button 502 and the play/pause/slow motion button 526 is depressed while the corresponding "Play" button is actuated on the remote controller of the DVD player. Thereafter, the play/pause/slow motion button 526 includes a secondary function which is activated when actuation or depression of the auxiliary source button 502 switches functionality of the remote controller 500 from that of controlling the set top box 102 to that of controlling the auxiliary source device or the television set. In the embodiment, a light emitting diode (LED), possibly green in color, is provided under the auxiliary device power button 504 such that when activated to control an auxiliary device, the LED lights up.

Further, as auxiliary device control occurs only occasionally, the remote controller 500 is configured to switch back to set top box control after a time out period of 5 seconds from last depression of a button after auxiliary control activation. In a further embodiment, a maintained depression of the auxiliary device power button 504 causes the auxiliary device to activate or be deactivated. In yet another further embodiment, the number of buttons on the remote controller 500 are increased to match those as provided on a typical device remote controller, for example numerical keypad buttons, program up/down toggle buttons, etc.

In another embodiment, a set top box power button is provided in the place of the auxiliary device power button, which provides control over activation and deactivation of the set top box 102. Further, an additional functionality may be included into the interface between the remote controller 500 and the set top box 102 such that a maintained depression of the set top box power button, for example for 10 seconds, can cause the set top box 102 to undertake a system reset task.

Directional (up, down, left and right) buttons 508 as well as activation button 510 are provided centrally in the remote controller 500 for manipulation of GUI 300, or to perform typical cursor control as provided on the GUI 300 on screen. Further the directional buttons 508 and the activation button 510 are also useful within multiple games and applications for control usage. Up and Down volume buttons 512 and 512 are provided to allow a user to adjust the volume of media playback or application sound from the set top box 102. Further, volume button 514 provides a mute functionality which causes sound signals from the set top box 102 to cease being provided to external speakers attached to a display screen or standalone speakers. Further, a LED light, possibly red, can also be provided under the volume button 514 to accentuate that the mute function of the remote controller 500 is on.

Buttons typical to Android OS configurations, such as the Home button 516, the Menu button 518, the Search button 520, and the Back button 522 are also provided on the remote controller 500, for use with the present Android OS of the embodiment. Should a different OS be incorporated, the layout of the remote controller 500 may correspondingly change.

Media playback buttons, rewind button 524, play/pause/slow motion button 526 and fast forward button 528 provide a user with control over playback for media such as movies or music or any other portable media deliverable from the set top box 102.

Remote controller 500 also provides, in the present embodiment, an instant buy button 530, located substantially central on the remote controller 500 and provides the user with a function to purchase or activate a selected option. Such a feature allows for better facilitation of the tracking feedback based advertising enhancements to the background, where a selection can be easily highlighted with the directional buttons 508 and then the instant buy button 530 can be used to bring the user directly into interface with the advertiser-paid service to register a transaction.

In further embodiments, there may be provided additional buttons 542, 544, 546, for preprogramed features. The programming of such additional buttons takes place prior to the deployment of the system 100 and the remote controller 500 into various environments. Typically, only administrators would be allowed access to carry out such programming, through a proprietary firmware editor which can be plugged into the internal hardware of the remote controller 500, in particular a portion of a circuit board providing communication access to a microprocessor chip. The remote controller is programmed such that the additional buttons 542, 544, 546, carry out such preprogramed features when actuated. For example, if the set top box of the present embodiment is to be provided in a hotel environment, the button 542 may be programed to bring up a room service menu on the display, button 544 may be programed to bring up a hotel concierge menu on the display, and the button 546 may be programed to dial up a hotel telephone operator, if the remote controller should support such a function. Alternatively, if the set top box is provided in for example a hospital environment, the additional buttons 542, 544, 546, may be programed to bring up a meal menu on the display screen for user selection, or an emergency medical assistance contact button. The above simply provide examples of various functions which may be coupled to the additional buttons 542, 544, 546, or presently provided buttons on a remote controller of an embodiment, and are clearly not intended to limit the scope of such functions to those described.

In the present embodiment, a cursor control function is provided by the remote controller 500. Remote controller 500 includes within the shell of the body 532 a gyroscope and an accelerator microelectromechanical system, which provides the remote controller 500 with a 6G cursor control function, handled by a cursor control module. In the present embodiment, the cursor is pointer-shaped, not unlike the mouse cursor of a typical personal computer. Such a representation is intentional, to allow a user free control with the remote controller 500 not unlike the use of a mouse on a personal computer. Control of the cursor involves waving the remote controller to activate the gyroscope and accelerometers, such that moving the remote should correspondingly move the on-screen cursor. In the present embodiment, a pointer cursor is not displayed or provided when a user is provided with choice based on selection options found in the plurality of selection rows. In most cases, control is limited to either by directional buttons 508 or by free movement pointer cursor control. This is to reduce confusion for the user as to the input protocol. However, if there should be applications in which it may be useful to have both forms of input, for example, internet browsers, the input control module 440 might be programmed for such inclusion.

Further, a microphone and speaker combination is provided on the remote controller 500, such as to provide a telecommunication handset function for the remote controller 500. A speaker 534, designed for ear-to-device functionality as a phone earpiece, is included at or near the top of the remote controller 500, and a pair of microphones 536 provided at or near a corresponding bottom of the remote controller 500. The microphones 536 and the speaker 534 are located together on the front side of the remote controller 500 such that a user can hold the remote controller to the side of his face like an actual handset. Such a telecommunications handset function is useful in this respect of the set top box 102 as the set top box 102 is capable operating telephony applications for which attaching a headset with microphone to the set top box 102 may not be practically sound. In another embodiment, the speaker 534 includes both a ear piece speaker and a loudspeaker, which may be switchable between each other depending on the telecommunication functionality selected.

As mentioned above, the remote controller 500 communicates with the set top box 102 through a 2.4 GHz frequency connection. Such a connection allows for a high speed data transfer connection, perhaps under the Wi-Fi-/802.11 standard of wireless data transfer, and with speeds of up to 36 Mbps, or faster. With such a data connection, data signals representing a telephone conversation over the Internet Protocol, or voice over IP (VOIP), operated by a software application program running on the set top box, may be delivered back and forth from the set top box 102 to the remote controller 500 to accommodate a telephone conversation. Further, the provided data connection can fully support other application purposes, such as cursor control, voice recording, audio speaker, vibration feedback, camera picture syncing, etc.

In the present embodiment, the remote controller 500 includes a microbe resistant polymeric shell 532. The microbe resistant polymeric shell 532 includes one or more polymers which are impregnated with one or more types of antimicrobial ions. As commonly known, remote controllers are in constant contact with various germs and harmful bacteria, especially if an area of application of the set top box 102 of the present embodiment is in hospitals. Hospitals are commonly believed to be the place one goes for treatment of infection or disease. However, the incidence of nosocomial infections continues to rise. While lowered immunity, invasive devices, and medications provide the greatest risks of nosocomial infection, the surfaces that patients come into contact with also provide a risk of exposure to infectious microbes.

The surface of the remote controller 500 is in contact with various germs and harmful bacteria. By infusing metal ions during the manufacturing process, concern that the ions will wear off by wear and tear during constant usage is alleviated.

In the present embodiment, the microbe resistant polymeric shell 532 includes a synthetic organic polymer, which can include such as, for example, low density polyethylene, high density polyethylene, polypropylene, polyvinylchloride, polystyrene, polyurethane and the like and combinations of these. In other embodiments, the polymer can be any other synthetic polymer, or non-synthetic polymer, for example, thermoplastics, thermosets, synthetic fibers and elastomers. Thermoplastics can include, for example, polyethylene, nylon, polystyrene, phenolics, epoxies, vinyls, polypropylene, polamides, polyesters, and the like, and combinations of these. Thermosets can include, for example, phenol-formaldehyde, urea-formaldehide, melamine resin, polyimides, and the like and combinations of these. In some embodiments, one or more or a combination of the above examples of polymers are included in the microbe resistant polymeric shell.

In embodiments, the microbe resistant shell can be made of non-synthetic polymers, such as, but not limited to collagen, chitosan, metal cellulose, and cellulose-based hydrogels, and other materials such as, for example, metal, ceramics, hydrogels, and the like and combinations of these.

In the embodiment, the antimicrobial resistance can be selected from, for example, resistance to viruses, bacteria, fungi and the like and combinations of these. Antimicrobial resistance can be provided by metal ions and/or organic acids such as, for example, silver, gold, copper, zinc, cobalt, nickel, zirconium, molybdenum, calcium, lactic acid, combinations of these, alloys involving these, and/or the like. Such antimicrobial resistant compounds or compositions can be impregnated, blended, or otherwise incorporated into one or more types of polymers, for instance, prior to a process (e.g., an extrusion process) directed to forming one or more portions of the remote controller shell 532.

In another embodiment, the remote controller can include an anti-microbial coating provided over the remote controller shell. In other embodiments, the remote controller can include an antimicrobial impregnated within the polymer and an antimicrobial coating over the remote controller. For example, the body of the handheld device can include an antimicrobial impregnated polymer while buttons or portions coming into more frequent contact with human skin may include an additional antimicrobial coating.

In some embodiments, the remote controller may include a touchscreen display. Such a touchscreen display may be coupled to a screen input/output control module and allows a user a simplified GUI for user manipulation. In other embodiments, a size-reduced version of the displayed video content may be provided on the touchscreen display. In some other embodiments, the touchscreen may be provided for cursor control by the user. In such embodiments, antimicrobial resistance can be additionally provided by the inclusion such metal ions and/or organic acids into glass and/or polymer materials used to form or fabricate such displays. It is also of note that such described features of the remote controller of the present disclosure can be provided for other handheld devices. For example, a microbe resistant shell together with further antimicrobial resistance provided on a touchscreen display may be provided for a mobile communication device.

Further, in the present embodiment, an alpha-numeric keyboard is provided on the rear 550 of the remote controller 500. The alpha-numeric keyboard 552 includes a full QWERTY keyboard including multiple depressible keys 554 of which represent the Latin alphabet and secondary function keys such as "Shift" and "Fn" which allow for the keys 554 to provide secondary or further functional inputs.

Such an alpha-numeric keyboard 552 allows a user to provide alpha-numeric input to an application operating on the set top box 102, and displaying on the screen 104. In alternative to the alpha-numeric keyboard 552, a user may use the cursor driven by the gyroscopic accelerometer to select alpha-numeric input from a displayed keyboard.

To accommodate the keys 554 of the alpha-numeric keyboard 552, a depressed platform 556 is provided for which the keys 554 are installed on. The depressed platform 556 is accentuated by a deliberate slope upwards to two elevated stands 558 on either side of the depressed platform 556. The stands 558 allow for the remote controller 550 to be placed with its rear face 550 down on a flat surface, without any detrimental effect to the keys 554 of the alpha-numeric keyboard 552. The depressed platform 556 of the remote controller 500 also provides a convenient hand grip for a user when using the remote controller 500 as a telecommunications device, i.e. a phone.

In another embodiment a remote controller for the system 100 may be without the alpha-numeric keyboard on the reverse side of the controller, but may be provided with a keyboard sliding out sideways from the base of the remote controller. Such a sliding keyboard may include a full QWERTY keyboard, albeit with reduced key sizes, such as to accommodate the entire keyboard on the surface area provided.

In another embodiment, the remote controller 500 includes a camera device. The provision of a camera device is advantageous in conjunction with applications which provide video input, for example video-calling applications, or perhaps even to obtain customer-based direct input. Preferably, the remote controller 500 should also include a speaker and a microphone to enable audio and visual communication. As an example of a possibly useful application with such features, a patient in a hospital bed with a system 100 of the present disclosure, and an accompanying remote 500 with a camera, speaker and microphone, could activate a conveniently located application, or even be provided with a button shortcut, such that the patient could be put into direct communication with the ward medical station for immediate attention.

In another embodiment, the remote controller includes an audio jack, provided on a side 538 of the body 542 of the controller 500. The provision of an audio jack allows a user to plug a set of headphones, which includes over-ear headphones, full sized headphones, in-ear headphones, headsets or any other type of device which facilitates a projection for audio for personal consumption, into the remote controller to enhance a user's auditory experience.

With the wireless data connection as mentioned above, auditory input is very easy duplicated or re-channeled from the set top box to the remote controller 500 for a user's consumption. Further, the set top box can also receive feedback from a remote controller 500, particularly a feedback module coupled to the audio jack, indicating that a headphone set has been plugged into the audio jack, and which also sends a redirect request to the set top box. The set top box thereafter redirects sound to the audio jack and headphones, while cutting off audio feed into the attached television set.

### Network interaction function

An intra-network communications module 450 is provided in memory 400. Such an intra-network communications module 450 supervises the communications between within the client-server network as illustrated in FIG. 2, but in particular establishes and maintains a separate intra-network communication web 250 for dedicated communication between the server 200 and various clients 240, the communications web 250 unlike the client-server communication stream described earlier between server and client for the delivery of content. The communications web 250 thus includes multiple intra-network communication links 251-256 connecting the server 200 with each client 240, in particular the server-located intra-network communications module 250 with the local box top intra-network communications module 450, and also connecting each client 240 therewith.

In the embodiment, the communications web 250 is operating on a separate communications protocol from the server-client content delivery stream, which is usually carried out based on the TCP/IP suite of protocols. Communications web 250 instead establishes communications on an Extensible Messaging and Presence Protocol (XMPP) communications protocol. Relying on such a communications backbone allows for near real-time instant messaging between clients, running multiple social networking services, various administrative maintenance functions, video and file transfer between clients 240, Voice over IP communication between clients and even shared network gaming between clients.

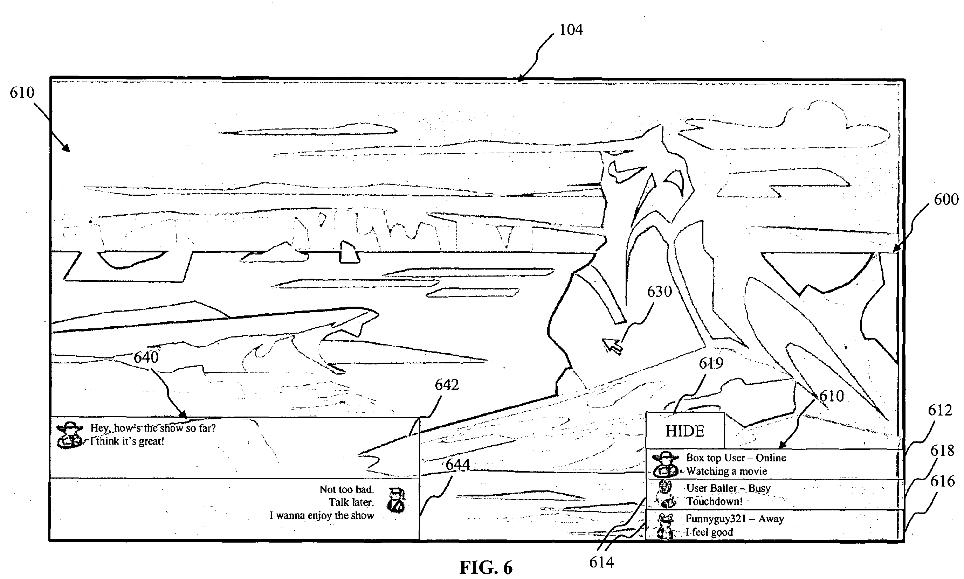

FIG. 6 illustrates a screen display of a GUI according to another embodiment according to the present disclosure. In this embodiment, GUI 600 is over-layed on a movie video display 602 screened from the set top box 102 and provided by the movie application 406 operating in communication with content delivery server 200 to stream the movie 602 over the Internet. A social networking application 460 (FIG. 4) operates concurrently off the memory 400 even during the screening of the movie 610.

Social networking application 460 provides for the user of the set top box 102 to register his accounts for various social networking sites, and the overall application consolidates his various accounts and receives feeds and updates from any or all of his registered social networking accounts. The user, through various application settings, can also determine how his updates from the set top box are to be set up, or how to establish instant messaging chatrooms within various social networking accounts. Social networking application 460 includes a networking module 462, which establishes connectivity between the social networking application 460 on the local set top box 102 with communication portals of various social networking sites, for example - Facebook 464, Google+ 466, and Twitter 468, so as to maintain connectivity to poll for updates or feeds, or to provide a user's updates of feeds into the social networking sites.

Returning to FIG. 6, social networking application 460 generates a status box 610 displayed in a bottom corner of the screen 104. Status box 610 provides regular updates and feeds as received from the various social networking sites 464, 466, 468, and as according to settings predetermined by the user, displays accordingly within the status box 610. For example, a top portion 612 of the status box displays the set top box user's social networking name and a small frame is provided to display a user's designated logo or picture or avatar, if any. The top portion 612 also provides the present availability status as well as social status of the user. By selecting, for example, on textual display portion 613 of the top portion 612, the user is provided with a text entry box for which to provide his present social status update. A status feed portion 614 is provided which regularly updates 616, 618 based on received updates from the various social networking sites 464, 466, 468. The status feed portion 614 is programmed to show only a small number of feeds, but a user is also able to access a history of feeds by scrolling through the incoming feeds.

Status box 610, in the present embodiment, is designed to carry out an auto-hide function. Upon receiving a status update, the status box 610 rises up to display its full size from being hidden, and highlights a newly received update 618 for viewing by the user. The previously received update 616 is pushed down in the status feed portion 614, until it is hidden from view unless the user intentionally scrolls down in the status feed portion 614 to look for a status update. After a predetermined time period, for example 3 seconds, without interaction with the status box 610 by the user, the status box 610 automatically carries out its auto-hide function and hides itself from display. Interaction by the user with the status box 610 could be defined by the moving of the cursor 630 with the paired remote controller 500 to any display portion over the status box 610. It is suggested that the cursor 630 has a similar time-out period, of for example 5 seconds, so should a cursor time-out over the status box 610, thereafter being hidden from view, the status box 610 similarly undertakes its auto-hide function and is hidden from display. A "hide" button 620 is also provided for a user to temporarily or permanently hide the status box 610 to prevent it from showing further updates.

A chat box 640 is also generated by the social networking application 460 for display on the screen 104, and overlaying the displayed movie 602. Opening a chat box 640 can be carried out in the present embodiment by selecting the small frame displaying the user's designated logo or picture or avatar in top portion 610. The chat box 640 thereafter provides a list of contacts from which the user can select from to initiate an online messaging session with. Alternatively, selecting the display frame of another user from an update in the status box 610 also opens up a chat box 640 and initiates an online instant messaging session.

Within the chat box 640, and once the user has established an instant messaging session, the user can proceed to chat with the selected party by typing his message and responses, which are displayed in the user chat portion 642, and viewing the incoming messages displayed in the received chat portion 644. Textual entry may be provided by a slide-out keyboard as earlier described on the remote controller 500. Alternatively, an application and a Bluetooth connection may be provided for connection with a Bluetooth keyboard, or in another scenario with a smartphone coupled to the set top box 102 for data input. The chat box 640 has a time-out auto-hide function similar to that of the status box 610, such that the chat box 640 does not remain on screen during periods of inactivity and hindering the user's enjoyment of the movie 602.

In the embodiment, a two party chat is described. In other embodiments, multiple users can be party to a single chat, and provided in a single chat box 640. In yet other embodiments, multiple chat boxes of a reduced size may be provided for multiple chats carried out concurrently by the user of the set top box 102. In the embodiment, the parties to the chat may be from the same content delivery network operating over the intra-network communications web 250. If so, the chat box 640 could open up to various options, for example file transfer between parties, creation of polls, concurrent working on data workbooks or spreadsheets, video sharing through web camera, or even screen sharing or control of the other user.

In a further embodiment, even applications which may not be considered social networking can be adopted under the networking module 462. For example, pure instant messaging applications such as Whatsapp or LINE, which typically require linking to an actual mobile telephone number, can be registered and incorporated into communications with the networking module 462 such that the displayed chat box 640 can be user to host a chat on Whatsapp. The communication web 250 and the networking module 462 thus provides a user of the set top box 102 convenience and inter-operability integration of several various functions, all displayable on a large screen display, and in the comfort of his own sofa. Aspects of particular embodiments of the present disclosure address at least one aspect, problem, limitation, and/or disadvantage associated with existing entertainment content delivery system. While features, aspects, and/or advantages associated with certain embodiments have been described in the disclosure, other embodiments may also exhibit such features, aspects, and/or advantages, and not all embodiments need necessarily exhibit such features, aspects, and/or advantages to fall within the scope of the disclosure. It will be appreciated by a person of ordinary skill in the art that several of the above-disclosed systems, components, processes, or alternatives thereof, may be desirably combined into other different systems, components, processes, and/or applications. In addition, various modifications, alterations, and/or improvements may be made to various embodiments that are disclosed by a person of ordinary skill in the art within the scope of the present disclosure. Such different systems, components, processes and/or modifications, alterations, and/or improvements are encompassed by the following claims.

## Claims

1. A system for delivering content to a display screen (104) viewable by a user, the system comprising:
a set top box (102) disposed within an environment, the set top box responsive to remote control functions including cursor control functions and is configured for presenting a GUI (300) on the display screen (104); and
a remote controller (500) configured for generating remote control functions directed to the set top box (102) and enabling user control over the GUI (300),
wherein the remote controller (500) comprises:
a first plurality of keys carried by a first surface of the remote controller (500) and configured for controlling particular functions to be carried out by the set top box (102) including GUI (300) control functions, the plurality of keys including a set of directional buttons (508) and a selection activation button (510);
a second plurality of keys comprising an alpha-numeric keyboard (552) carried by a second surface of the remote controller (500) opposite to the first surface; and
a cursor control module (440) configured for generating cursor control functions
**characterized in that**:
the remote control functions include 6G cursor control functions;
the cursor control module (440) includes accelerometers and gyroscopes responsive to user motions and is configured for generating 6G cursor control functions;
the GUI (300) is configured for selectively presenting (a) a background screen (340) and a plurality of selection rows horizontally displayed thereacross, and (b) entertainment content, and wherein the plurality of selection rows includes (i) a main selection row (310) in which first selection options are slidably displayed thereacross, and (ii) a second selection row (320) within which second selection options are slidably displayed thereacross in response to user selection of one of the first selection options of the main selection row (310);
the selection activation button (510) is configured for selection of the first or the second selection options; and
the GUI (300) is configured for displaying a cursor on the display screen (104) in response to remote controller (500) motions but not displaying the cursor on the display screen (104) when the user is provided with a choice based on the first or second selection options.

2. The system of claim 1, wherein the first plurality of keys includes buttons for performing preprogrammed functions related to the environment, and wherein the environment comprises one of:
(a) a hospital, and wherein the preprogrammed functions comprise one or more of bringing up a meal menu on the display, and requesting emergency assistance; and
(b) a hotel, and wherein the preprogrammed functions comprise one or more of bringing up a room-service menu on the display, bringing up a concierge menu on the display, and dialing a hotel telephone operator.

3. The system of claim 1, wherein the remote controller (500) further comprises:
a remote controller (500) wireless communications module provided for communication with a corresponding box wireless communications module in the set top box (102) to establish a dedicated wireless communication channel is between the remote controller wireless communications module and the box wireless communications module for exclusive communication between the remote controller and the set top box (102); and
a channel handling module on the wireless communications module configured for monitoring the wireless communication channel and carrying out a switch and re-establishment of a wireless communication channel between the remote controller (500) and the set top box (102) when a possibility of communications interference is determined.

4. The system of claim 1, wherein the remote controller (500) further comprises a feedback module coupled to an audio jack (532) of the remote controller (500), the feedback module configured for providing an indication to the set top box (102) that headphones have been connected to the audio jack (532), and issuing a redirect request for streaming audio to the remote controller (500), and wherein in response to the redirect request the set top box (102) cuts off an audio feed corresponding to content presented on the display screen (104).

5. The system of claim 1, wherein the remote controller (500) comprises a housing (532) made of a polymer provided with a first antimicrobial resistance, and wherein buttons of the remote controller (500) are provided with a second antimicrobial resistance in addition to the first antimicrobial resistance.

6. The system of claim 1, wherein the set top box (102) includes a tracking module (430)configured for tracking user choices among the selection options within the plurality of selection rows, wherein the system further comprises a content server (200) coupled the analytics module, the content server (200) comprising:
an analytics module (220) configured for communication with the tracking module (430) and analyzing user selection of tracked user selection options; and
an advertising module (230) configured for identifying updated background screencontent and updated selection options based on tracked user selection options,
wherein the GUI (300)is configured for presenting the updated background screen content and the updated selection options on the display screen (104).

7. The system of claim 6, wherein the updated background screen content or the updated selection options correspond to advertisements.

8. The system of claim7, wherein the remote controller (500) further carries an instant buy button (530), and wherein in response to user selection of the instant buy button (530) the set top box (102) transitions the GUI (300) to an interface corresponding to an advertiser paid service to register a purchase transaction.

## Patentansprüche

1. System zur Übermittlung von Inhalten an einen Bildschirm (104), die für einen Nutzer einsehbar sind, wobei das System umfasst:
eine Set-Top-Box (102), die in einem Umfeld eingerichtet ist, die auf Fernsteuerungsfunktionen, mit einschließend Steuerungsfunktionen eines Cursors, anspricht und die so eingerichtet ist, dass sie eine grafische Benutzeroberfläche (GUI) (300) auf dem Bildschirm (104) darstellt; und
eine Fernbedienung (500), die zur Erzeugung von Fernsteuerungsfunktionen, die an die Set-Top-Box (102) gerichtet sind, eingerichtet ist und die einem Benutzer die Steuerung der GUI (300) ermöglicht,
wobei die Fernbedienung (500) umfasst:
eine erste Vielzahl an Tasten, die von einer ersten Oberfläche der Fernbedienung (500) getragen werden und die eingerichtet sind, um bestimmte Funktionen, die durch die Set-Top-Box (102) ausgeführt werden, zu steuern, mit einschließend Steuerungsfunktionen betreffend die GUI (300), wobei die Vielzahl an Tasten einen Satz Richtungstasten (508) und eine Auswahl-Aktivierungstaste (510) mit einschließt;
eine zweite Vielzahl an Tasten umfassend eine alphanumerische Tastatur (552), die von einer zweiten Oberfläche der Fernbedienung (500) gegenüber zu der ersten Oberfläche getragen werden; und
ein Modul zur Steuerung des Cursors (440), das zur Erzeugung der Steuerungsfunktionen eingerichtet ist,
**dadurch gekennzeichnet, dass**:
die Fernsteuerungsfunktionen 6G Steuerungsfunktionen des Cursors mit einschließen;
das Modul zur Steuerung des Cursors (440) Beschleunigungsmesser und Kreisel, die auf Bewegungen des Benutzers ansprechen, mit einschließt und zur Erzeugung von 6G Steuerungsfunktionen des Cursors eingerichtet ist;
die GUI (300) eingerichtet ist, um wahlweise (a) einen Hintergrundbildschirm (340) und eine Vielzahl an horizontal angezeigten Auswahlreihen, und (b) Unterhaltungsinhalte darzustellen, wobei die Vielzahl an Auswahlreihen (i) eine Hauptauswahlreihe (310), in der erste Auswahloptionen verschiebbar angezeigt werden, mit einschließt, und (ii) eine zweite Auswahlreihe (320), innerhalb der, als Reaktion auf die Benutzerauswahl aus einer der ersten Auswahloptionen der Hauptauswahlreihe (310), zweite Auswahloptionen verschiebbar angezeigt werden;
die Auswahl-Aktivierungstaste (510) zur Auswahl der ersten oder zweiten Auswahloptionen eingerichtet ist; und
die GUI (300) eingerichtet ist, um einen Cursor auf dem Bildschirm (104) als Reaktion auf die Bewegungen der Fernbedienung (500) anzuzeigen, jedoch den Cursor nicht auf dem Bildschirm (104) anzuzeigen, wenn dem Benutzer eine Wahl basierend auf den ersten oder zweiten Auswahloptionen angeboten wird.

2. System nach Anspruch 1, wobei die erste Vielzahl an Tasten Tasten zur Durchführung auf das Umfeld bezogener vorprogrammierter Funktionen mit einschließt, und wobei das Umfeld eines umfasst aus:
(a) einem Krankenhaus, und wobei die vorprogrammierten Funktionen eine oder mehrere umfassen aus dem Hervorbringen eines Speiseplans auf dem Bildschirm, und dem Anfordern einer Notfallhilfe; und
(b) einem Hotel, und wobei die vorprogrammierten Funktionen eine oder mehrere umfassen aus dem Hervorbringen eines Menüs auf dem Bildschirm betreffend den Zimmerservice, dem Hervorbringen eines Menüs auf dem Bildschirm betreffend den Portier (concierge), und dem Anwählen eines Hoteltelefonbetreibers.

3. System nach Anspruch 1, wobei die Fernbedienung (500) des Weiteren umfasst:
ein Modul zur drahtlosen Kommunikation der Fernbedienung (500), das vorgesehen ist, um mit einem entsprechenden Modul zur drahtlosen Kommunikation in der Set-Top-Box (102) zu kommunizieren, um einen zugeordneten Kanal zur drahtlosen Kommunikation zwischen dem Modul zur drahtlosen Kommunikation der Fernbedienung und dem Modul zur drahtlosen Kommunikation der Box für eine ausschließliche Kommunikation zwischen der Fernbedienung und der Set-Top-Box (102) einzurichten; und
ein Modul zur Kanalhandhabung auf dem Modul zur drahtlosen Kommunikation, das eingerichtet ist, um den Kanal zur drahtlosen Kommunikation zu überwachen sowie einen Wechsel und eine Wiedereinrichtung eines Kanals zur drahtlosen Kommunikation zwischen der Fernbedienung (500) und der Set-Top-Box (102) durchzuführen, wenn eine mögliche Kommunikationsstörung ermittelt wird.

4. System nach Anspruch 1, wobei die Fernbedienung (500) des Weiteren ein Rückmeldemodul, das an einen Audioanschluss (532) der Fernbedienung (500) angeschlossen ist, umfasst, wobei das Rückmeldemodul eingerichtet ist, um der Set-Top-Box (102) einen Hinweis zu geben, dass Kopfhörer mit dem Audioanschluss (532) verbunden wurden, und um eine Umleitungsanfrage zur Audioübertragung an die Fernbedienung (500) zu richten, und wobei die Set-Top-Box (102) als Reaktion auf die Umleitungsanfrage eine Audiozufuhr, die dem auf dem Bildschirm (104) dargestellten Inhalt entspricht, abschneidet.

5. System nach Anspruch 1, wobei die Fernbedienung (500) ein Gehäuse (532) umfasst, das aus einem Polymer hergestellt ist, welches mit einer ersten antimikrobiellen Resistenz ausgestattet ist, und wobei Tasten der Fernbedienung (500) mit einer zweiten antimikrobiellen Resistenz zusätzlich zu der ersten antimikrobiellen Resistenz ausgestattet sind.

6. System nach Anspruch 1, wobei die Set-Top-Box (102) ein Verfolgungsmodul (430) mit einschließt, das eingerichtet ist, um Auswahlen des Benutzers unter den Auswahlmöglichkeiten innerhalb der Vielzahl an Auswahlreihen zu verfolgen, wobei das System des Weiteren einen Inhaltsserver (200), der mit einem Analysemodul verknüpft ist, umfasst, wobei der Inhaltsserver (200) umfasst:
ein Analysemodul (220), das zur Kommunikation mit dem Verfolgungsmodul (430) und zur Analyse der Benutzerauswahl verfolgter Benutzerauswahloptionen eingerichtet ist; und
ein Anzeigemodul (230), das zur Identifizierung des aktualisierten Inhalts des Hintergrundbildschirms und aktualisierten Auswahloptionen basierend auf verfolgten Benutzerauswahloptionen eingerichtet ist,
wobei die GUI (300) eingerichtet ist, um den aktualisierten Inhalt des Hintergrundbildschirms und die aktualisierten Auswahloptionen auf dem Bildschirm (104) darzustellen.

7. System nach Anspruch 6, wobei der aktualisierte Inhalt des Hintergrundbildschirms und die aktualisierten Auswahloptionen Werbeanzeigen entsprechen.

8. System nach Anspruch 7, wobei die Fernbedienung (500) des Weiteren eine Sofort-Kaufen-Taste (530) aufweist, und wobei als Reaktion auf die Benutzerauswahl der Sofort-Kaufen-Taste (530) die Set-Top-Box (102) die GUI (300) zu einer Oberfläche eines Bezahlservices des Anbieters zur Erfassung eines Kaufvorgangs überleitet.

## Revendications

1. Un système de délivrance de contenu à un écran d'affichage (104) pouvant être visualisé par un utilisateur, le système comprenant:
un boîtier décodeur (102) disposé dans un environnement, le boîtier décodeur répondant à des fonctions de commande à distance comprenant des fonctions de commande de curseur et étant configuré pour présenter une interface utilisateur graphique (300) sur l'écran d'affichage (104); et
une télécommande (500) configurée pour générer fonctions de commande à distance dirigées au boîtier décodeur (102) et permettant un contrôle par utilisateur de l'interface utilisateur graphique (300),
dans lequel la télécommande (500) comprend :
une première pluralité de touches portées par une première surface de la télécommande (500) et configurées pour contrôler des fonctions particulières devant être exécutées par le boîtier décodeur (102) comprenant des fonctions de control d'interface utilisateur graphique (300), la pluralité de touches comprenant un set de boutons de direction (508) et un bouton d'activation de sélection (510);
une deuxième pluralité de touches comprenant un clavier alphanumérique (552) porté par une deuxième surface de la télécommande (500) opposée à la première surface; et
un module de commande de curseur (440) configuré pour générer fonctions de commande de curseur
**caractérisé en ce que** :
les fonctions de commande à distance comprennent des fonctions 6G de commande de curseur ;
le module de commande de curseur (440) comprend des accéléromètres et des gyroscopes sensibles aux mouvements de l'utilisateur et est configuré pour générer des fonctions 6G de commande de curseur ;
l'interface utilisateur graphique (300) est configurée pour présenter sélectivement (a) un écran d'arrière-plan (340) et une pluralité de rangées de sélection affichées horizontalement à son intérieur, et (b) un contenu de divertissement, et dans lequel la pluralité de rangées de sélection comprend (i) une rangée de sélection principale (310) dans laquelle des premières options de sélection sont affichées de manière coulissante, et (ii) un deuxième rangée de sélection (320) dans laquelle des deuxièmes options de sélection sont affichées de manière coulissante en réponse à la sélection par l'utilisateur d'une des premières options de sélection de la rangée de sélection principale (310);
le bouton d'activation de sélection (510) est configuré pour la sélection des premières ou des deuxièmes options de sélection ; et
l'interface utilisateur graphique (300) est configurée pour afficher un curseur sur l'écran d'affichage (104) en réponse à des mouvements de télécommande (500) mais ne pas afficher le curseur sur l'écran d'affichage (104) quand l'utilisateur est muni d'un choix basé sur les premières ou deuxièmes options de sélection.

2. Le système selon la revendication 1, dans lequel la première pluralité de touches comprend des boutons pour exécuter des fonctions préprogrammées relatives à l'environnement, et dans lequel l'environnement comprend l'un des:
(a) un hôpital, et dans lequel les fonctions préprogrammées comprennent un ou plusieurs parmi l'affichage d'un menu de repas sur le display, et la demande d'une aide d'urgence ; et
(b) un hôtel, et dans lequel les fonctions préprogrammées comprennent un ou plusieurs of l'affichage d'un menu de repas en chambre sur le display, l'affichage d'un menu de concierge sur le display, et la numérotation d'un opérateur téléphonique d'hôtel.

3. Le système selon la revendication 1, dans lequel la télécommande (500) comprend en outre
un module de communication sans fil de télécommande (500) prévu pour la communication avec un module de communication sans fil de boîtier correspondant dans le boîtier décodeur (102) pour établir un canal de communication sans fil dédié entre le module de communication sans fil de télécommande et le module de communication sans fil de boîtier pour une communication exclusive entre la télécommande et le boîtier décodeur (102); et
un module de gestion de canal sur le module de communication sans fil configuré pour monitorer le canal de communication sans fil et exécuter un commutateur et rétablissement d'un canal de communication sans fil entre la télécommande (500) et le boîtier décodeur (102) lorsqu'une possibilité d'interférence de communications est déterminée.

4. Le système selon la revendication 1, dans lequel la télécommande (500) comprend en outre un module de contre-réaction couplé à une prise audio (532) de la télécommande (500), le module de contre-réaction configuré pour fournir une indication au boîtier décodeur (102) que des écouteurs ont été connectés à la prise audio (532), et délivrer une demande de redirection pour de l'audio en streaming à la télécommande (500), et dans lequel en réponse à la demande de redirection le boîtier décodeur (102) coupe une alimentation audio correspondante au contenu présenté sur l'écran d'affichage (104).

5. Le système selon la revendication 1, dans lequel la télécommande (500) comprend un boîtier (532) constitué d'un polymère muni d'une première résistance antimicrobienne, et dans lequel des boutons de le télécommande (500) sont munis d'une deuxième résistance antimicrobienne en plus de la première résistance antimicrobienne.

6. Le système selon la revendication 1, dans lequel le boîtier décodeur (102) comprend un module de suivi (430) configuré pour suivre des choix d'utilisateur parmi les options de sélection parmi la pluralité de rangées de sélection, dans lequel le système comprend en outre un server de contenu (200) couplé à un module d'analyse, le contenu (200) comprenant:
un module d'analyse (220) configuré pour communiquer avec le module de suivi (430) et analyser des sélections d'utilisateur des options sélection d'utilisateur suivies ; et
un module publicitaire (230) configuré pour identifier un contenu d'écran d'arrière-plan mis à jour et des options de sélection mises à jour sur la base des options de sélection d'utilisateur suivies,
dans lequel l'interface utilisateur graphique (300) est configurée pour présenter le contenu d'écran d'arrière-plan mis à jour et les options de sélection mises à jour sur l'écran d'affichage (104).

7. Le système selon la revendication 6, dans lequel le contenu d'écran d'arrière-plan mis à jour ou les options de sélection mises à jour correspondent à des publicités.

8. Le système selon la revendication 7, dans lequel la télécommande (500) porte en outre un bouton d'achat instantané (530), et dans lequel en réponse à une sélection d'utilisateur du bouton d'achat instantané (530) le boîtier décodeur (102) transforme l'interface utilisateur graphique (300) dans une interface correspondant à un service d'annonceur payant pour enregistrer une transaction d'achat.
